# EUROPEAN PATENT SPECIFICATION

(11) **EP 2 007 155 B1**
(45) Date of publication and mention of the grant of the patent: **11.01.2012**
(21) Application number: 08163967.6
(22) Date of filing: 01.07.2005
(51) Int. Cl.: H04W 8/18, H04W 48/08

(54) **System and method for managing forbidden network lists on a wireless user equipment (UE) device**
System und Verfahren zur Verwaltung verbotener Netzlisten auf einem drahtlosen Benutzergerät
Système et procédé pour gérer des listes de réseaux interdits dans un dispositif d'équipement de l'utilisateur (UE) sans fil

(43) Date of publication of application: 24.12.2008
(62) Divisional of application: 05254145.5
(73) Proprietor: RESEARCH IN MOTION LIMITED, Waterloo, Ontario N2L 3W8 (CA)
(72) Inventor: Buckley, Adrian, Tracy, IL 95376 (US); Allen, Andrew, Mundelein, IL 60060 (US)
(74) Representative: Fennell, Gareth Charles

(56) References cited:
- WO-A-01/54435
- WO-A-2004/077860
- US-A- 5 159 625
- US-A1- 2003 119 481
- L.M ERICSSON: "CF888 User Manual"[Online] 1998, pages 1-88, XP002513779 Retrieved from the Internet: URL:http://support.t-mobile.com/knowbase/r oot/public/tm30005.pdf> [retrieved on 2009-02-05]
- "Digital cellular telecommunications system (Phase 2+); Universal Mobile Telecommunications System (UMTS); Non-Access-Stratum functions related to Mobile Station (MS) in idle mode (3GPP TS 23.122 version 6.5.0 Release 6); ETSI TS 123 122" ETSI STANDARDS, LIS, SOPHIA ANTIPOLIS CEDEX, FRANCE, vol. 3-CN1, no. V6.5.0, 1 June 2005 (2005-06-01), XP014030494 ISSN: 0000-0001
- "Digital cellular telecommunications system (Phase 2+); Mobile radio interface layer 3 specification (3GPP TS 04.08 version 7.21.0 Release 1998); ETSI TS 100 940" ETSI STANDARDS, LIS, SOPHIA ANTIPOLIS CEDEX, FRANCE, vol. 3-CN1, no. V7.21.0, 1 December 2003 (2003-12-01), XP014015836 ISSN: 0000-0001

## Description

### FIELD OF THE DISCLOSURE

The present patent disclosure generally relates to communication networks. More particularly, the present patent application is directed to a system and method for managing forbidden network lists on a wireless device.

### BACKGROUND

It is well known in the wireless communications art to use a removable module in conjunction with a wireless mobile equipment (ME) device. Such removable modules are typically provisioned with a number of network lists (e.g., a list of forbidden networks) that could be downloaded to the ME device when needed. Also, such lists may be provisioned within a memory integrated into the wireless device.

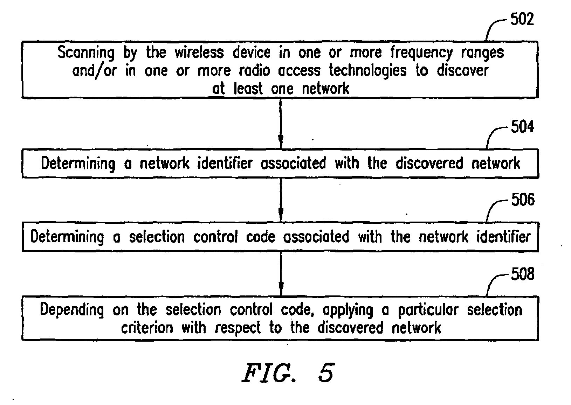

Currently, it is possible for the wireless device to overwrite a forbidden network list through a manual network selection process or through network selection attempts to a network other than a home network. Since the network operator typically provision and control various network lists including forbidden network lists for modifying or enhancing user experience (e.g., via well known over-the-air or OTA mechanisms), it becomes crucial that effective control over a user's lists be exercised in some fashion. Additionally, such control over the application of network lists facilitates a more uniform user experience through appropriate OTA updates to the network lists.
[004A] WO 2004/077860 (Siemens) discloses a scheme for operating mobile devices, preferably under UMTS and at least one wireless local area network (WLAN). The mobile device carries a list of forbidden PLMNs, identified by Mobile Country Code (MCC) and Mobile Network Code (MNC). The mobile device also contains a list of forbidden WLANs, identified by MCC, WLAN type code, WLAN application code and WLAN Network Code (WNC). See Fig. 5 and page 3, lines 26-36 and page 9, line 10 - page 10, line 5 (or see paragraphs [0011] and [0030]-[0037] in the corresponding U.S. application, 2006/0040661).
US 2003/119481 (Haverinen) is directed to network selection when roaming using a mobile device that can connect to both PLMNs and a wireless local access network (WLAN). The mobile device performs network, selection using PLMN identifiers stored on the device. The user may not necessarily have a subscription with a local networks, but may be able to use local network services by means of a subscriber identification module that allows the user to authenticate with the home network so that billing can be forwarded from the WLAN to the home PLMN. The mobile device performs PLMN selection on the basis of a received PLMN identifier and a PLMN list stored in the mobile device. The mobile device can also maintain a list of forbidden PLMN that are not taken into account in network selection. See Paragraphs [0021]-[0022] and [0042].
"CF888 User Manual" [Online]; L.M. Ericsson; pages 1-88, XP002513779, 1998; retrieved 5 February 2009 from: <http://support.t-mobile.com/knowbase/ root/public/tm30005.pdf.> is a user's manual for the CF888 mobile phone by Ericsson. It notes that the phone operates on both the GSM 1900 band and an analogue band. The names of forbidden networks are stored on the SIM card; forbidden networks are apparently only available for emergency use. See page 6, column 2 and page 50, column 2.
"Digital Cellular Telecommunications System (Phase 2+); Universal Mobile Telecommunications System (UMTS); Non-Access Stratum functions related to Mobile Stations (MS) in Idle Mode (3GPP TS 23.122 version 6.5.0 Release 6), ETSI TS 123.122", ETSI Standards, no V6.5.0, 1 June 2005 is the standards reference covering the tasks undertaken by the core network protocols of a Mobile Station (MS) when in idle mode. It also describes the corresponding network functions. See page 5, paragraph 1 and page 9, chapter 3.1, paragraph 9.
WO 01/54435 (Telecommunications Systems) is directed to updating an Intelligent Roaming Database (IRDB) used in network selection. D5 appears to disclose logic that can provide a more personalized provision of updates to the IRDB. Networks listed in the IRDB can be designated according to their status: home, preferred, neutral and forbidden. See page 1, lines 1-5 and page 3, line 22 - page 4, line 12.

US 5,159,625 (GTE) is directed to network selection on a phone that can operate in both the "A" and "B" bands of GSM. *Zicker* notes that a list of System IDs (SIDs) are maintained on the phone and that some networks can be designated "negative" networks to prevent their selection. See column 1, lines 31-51 and column 16, lines 32-53.

"Digital Cellular Telecommunications System (Phase 2+); Mobile Radio Interface Layer 3 specification (3GPP TS 04.08 version 7.21.0 Release 1998); ETSI TS 100 940", ETSI Standards, vol. 3-CN1, no. V7.21.0, 1 December 2003 is the standards document covering the procedures used at the radio interface for Call Control, Mobility Management, Radio Resource management and Session Management. D7 notes that networks can be designated as forbidden. See page 28, first sentence and page 125, last sentence.

### SUMMARY

Aspects of the present invention are set out in the independent claims.

### BRIEF DESCRIPTION OF THE DRAWINGS

A more complete understanding of the embodiments of the present patent disclosure may be had by reference to the following Detailed Description when taken in conjunction with the accompanying drawings wherein:

FIG. 1 depicts a generalized network environment wherein an embodiment of the present patent disclosure may be practiced;

FIG. 2 depicts an exemplary embodiment of a network environment where a wireless user equipment (UE) device is operable to manage one or more Forbidden PLMN (FPLMN) lists in accordance with the teachings of the present patent disclosure;

FIG. 3 depicts an exemplary database structure associated with a PLMN list that is operable to be managed in accordance with the teachings of the present patent disclosure;

FIGS. 4A-4B depict additional exemplary database structures that may be utilized by a UE device for facilitating management of PLMN list(s);

FIG. 5 is a flowchart associated with an embodiment of the present patent disclosure; and

FIG. 6 depicts a block diagram of an embodiment of a wireless UE device according to the teachings of the present patent disclosure.

### DETAILED DESCRIPTION OF THE DRAWINGS

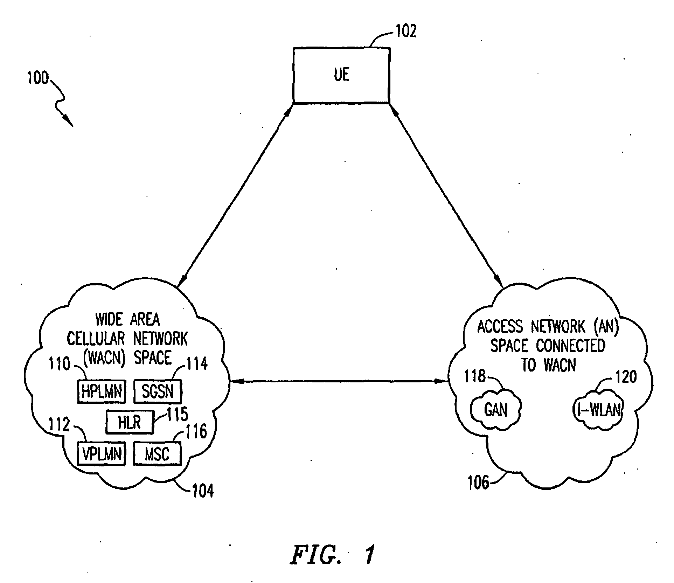

A system and method of the present patent disclosure will now be described with reference to various examples of how the embodiments can best be made and used. Like reference numerals are used throughout the description and several views of the drawings to indicate like or corresponding parts, wherein the various elements are not necessarily drawn to scale. Referring now to the drawings, and more particularly to FIG. 1, depicted therein is an exemplary generalized network environment 100 wherein one or more embodiments of the present patent disclosure may be practiced. A generalized wireless user equipment (UE) or mobile equipment (ME) device 102 may comprise any portable computer (e.g., laptops, palmtops, or handheld computing devices) or a mobile communications device (e.g., cellular phones or data-enabled handheld devices capable of receiving and sending messages, web browsing, et cetera), or any enhanced personal digital assistant (PDA) device or integrated information appliance capable of email, video mail, Internet access, corporate data access, messaging, calendaring and scheduling, information management, and the like, that is preferably operable in one or more modes of operation and in a number of frequency bands and/or radio access technologies (RATs). For example, UE/ME device 102 may operate in the cellular telephony band frequencies as well as Wireless Local Area Network (WLAN) bands. Further, other bands in which the UE device could operate wirelessly may comprise Wi-Max bands or one or more satellite bands. Accordingly, for purposes of the present patent disclosure, those skilled in the art should recognize that the term "UE device" or "wireless device" may comprise a mobile equipment (ME) device (with or without any removable storage module or RSM such as a Universal Subscriber Identity Module (USIM) card, Removable User Identity Module (RUIM) card, a Subscriber Identity Module (SIM) card, or a compact Flash card, etc.) as well as other portable wireless information appliances, also with or without such RSMs.

By way of illustration, the network environment 100 is envisioned as two broad categories of communication spaces capable of providing service to UE device 102 wherein acquisition of network advertisement information may be accomplished in accordance with the teachings set forth herein. In wide area cellular network (WACN) space 104, there may exist any number of Public Land Mobile Networks (PLMNs) that are operable to provide cellular telephony services which may or may not include packet-switched data services. Depending on the coverage area(s) and whether the user is roaming, WACN space 104 can include a number of home networks 110 (i.e., home PLMNs or HPLMNs, or equivalent HPLMNs or EHPLMNs), visited networks (i.e., VPLMNs) 112, each with appropriate infrastructure such as Home Location Register (HLR) nodes 115, Mobile Switching Center (MSC) nodes 116, and the like. Since the WACN space 104 may also include a General Packet Radio Service (GPRS) network that provides a packet radio access for mobile devices using the cellular infrastructure of a Global System for Mobile Communications (GSM)-based carrier network, a Serving GPRS Support Node (SGSN) 114 is exemplified therein. Additionally, by way of generalization, the PLMNs of the WACN space 104 may comprise radio access and core networks selected from the group comprising Enhanced Data Rates for GSM Evolution (EDGE) networks, Integrated Digital Enhanced Networks (IDENs), Code Division Multiple Access (CDMA) networks, Time Division Multiple Access (TDMA) networks, Universal Mobile Telecommunications System (UMTS) networks, or any 3^{rd} Generation Partnership Project (3GPP)-compliant network (e.g., 3GPP or 3GPP2), all operating with well known frequency bandwidths and protocols. That is, at least in some embodiments, the term "PLMN" may be deemed to represent various cellular and wireless technologies (e.g., WLAN, WiMax, public safety network implementations, etc.).

Further, UE device 102 is operable to obtain service from an access network (AN) space 106 that is connected to the WACN space 104. In one implementation, the AN space 106 includes one or more generic access networks (GANs) 118 as well as any type of wireless LAN (WLAN) arrangements 120, both of which may be generalized as any wireless AN that is operable to provide access services between UE device 102 and a PLMN core network using a broadband Internet Protocol (IP)-based network. WLAN arrangements 120 provide short-range wireless connectivity to UE device 102 via access points (APs) or "hot spots," and can be implemented using a variety of standards, e.g., IEEE 802.11b, IEEE 802.11a, IEEE 802.11g, HiperLan and HiperLan II standards, Wi-Max standard (IEEE 802.16 and IEEE 802.16e), OpenAir standard, and the Bluetooth standard (IEEE 802.15).

In one embodiment, interfacing between the WACN and AN spaces may be effectuated in accordance with certain standards. For instance, GAN 118 may be interfaced with one or more PLMNs using the procedures set forth in the 3GPP TR 43.901, 3GPP TS 43.318 and 3GPP TS 44.318 documents as well as related documentation. Likewise, WLAN 120 may be interfaced with at least one PLMN core using the procedures set forth in the 3GPP TS 22.234, 3GPP TS 23.234 and 3GPP TS 24.234 documents as well as related documentation, and may therefore be referred to as an Interworking WLAN (I-WLAN) arrangement.

Based on the foregoing, it should be recognized that the service infrastructure of the network environment 100 may be generalized into three broad segments: one or more radio access networks (RANs) (which can include cellular band technologies as well as WLAN technologies), one or more core networks (CNs), and one or more service networks (SNs). Depending on network ownership arrangements and service-level agreements, each RAN may support one or more CNs, each of which in turn may support one or more SNs. Such combinations of infrastructure equipment across multiple owners are sometimes used to create Mobile Virtual Network Operators (MVNOs). In some embodiments, the teachings of the present patent disclosure are equally applicable to MVNOs as to PLMNs. Since each RAN, CN, or SN may be provided with its own network identifier (ID code), numerous RAN-CN-SN combinations may be available in the network environment 100. As will be seen below, various network lists and associated data (e.g., user- or operator-preferred networks (access or visited), user- or operator-prohibited networks (access or visited), lists of network capabilities, frequency data (bands, channels, frequencies, etc.) associated with the listed networks) may be provisioned in the network environment or as part of an RSM (i.e., a module selected from USIM cards, RUIM cards, SIM cards, or compact Flash cards, etc.) operable with the UE device or in the network, which could be provided to the UE device or stored therein in a customized manner for facilitating appropriate network selection while attempting to locate a network for service in the exemplary network environment.

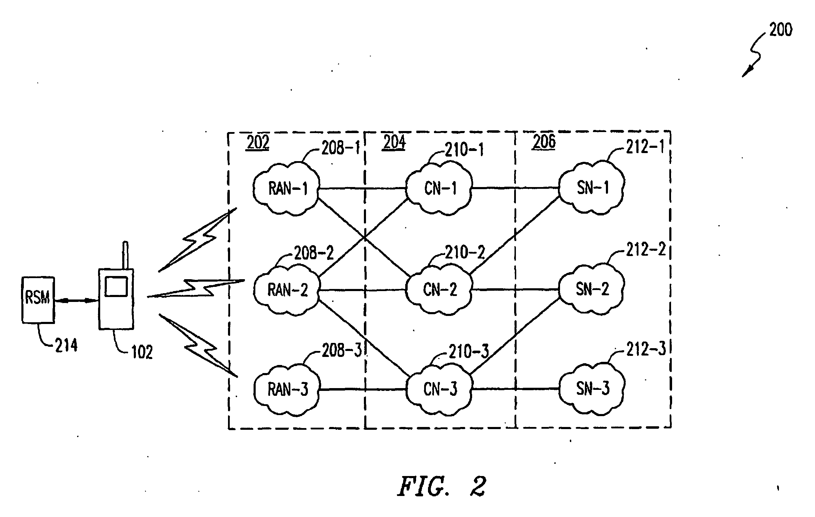

To formalize the teachings of the present disclosure, reference is now taken to FIG. 2 wherein an exemplary embodiment of a network environment 200 is shown that is a more concrete subset of the generalized network environment 100 illustrated in FIG. 1. As depicted, wireless UE/ME device 102 is operably disposed for acquiring network advertisement information via scanning from a RAN segment 202 that is coupled to a CN segment 204 which in turn is coupled to an SN segment 206. Three RANs are illustrative: RAN-1 208-1, RAN-2 208-2 and RAN-3 208-3, which are identified with the.network codes MANC1, MANC2 and MANC3, respectively. The CN segment 204 is also illustrated with three CNs: CN-1 210-1 (having an ID code of MCNC1), CN-2 210-2 (having an ID code of MCNC2) and CN-3 210-3 (having an ID code of MCNC3). Likewise, the SN segment 206 is illustrated with SN-1 212-1 (having an ID code of MSNC1), SN-2 212-2 (having an ID code of MSNC2) and SN-3 212-3 (having an ID code of MSNC3).

By way of example, RAN-1 208-1 is operable to support connectivity to two CNs, CN-1 210-1 and CN-2 210-2. In similar fashion, RAN-2 208-2 supports three CNs and RAN-3 208-3 supports only one CN. Each CN supports connectivity to one or more SNs: e.g., CN-3 210-3 connects to SN-2 212-2 as well as SN-3 212-3. Given the interconnectivity of the RAN/CN/SN segments, several combinations of identification codes may be obtained for purposes of uniquely identifying the various RAN-CN-SN combinations that the wireless UE device 102 can potentially discover and select from. For instance, with a suitable Mobile Country Code (MCC) being included, the three ID code combinations associated with RAN-1208-1 are:
[MCC.MANC1.MCNC1.MSNC1];
[MCC.MANC1.MCNC1.MSNC2]; and
[MCC.MANC1.MCNC2.MSNC2].

Likewise, the ID code combinations associated with RAN-2 208-2 are:
[MCC.MANC2.MCNC1.MSNC1];
[MCC.MANC2.MCNC1.MSNC2];
[MCC.MANC2.MCNC2.MSNC2];
[MCC.MANC2.MCNC3.MSNC2]; and
[MCC.MANC2.MCNC3.MSNC3].

The two ID code combinations associated with RAN-3 208-3 are: [MCC.MANC3.MCNC3.MSNC2] and [MCC.MANC3.MCNC3.MSNC2]. As described in detail in the related U.S. patent application entitled "SYSTEM AND METHOD FOR PROVIDING NETWORK ADVERTISEMENT INFORMATION VIA A NETWORK ADVERTISEMENT BROKER (NAB)," filed April 28, 2005; Application No. 11/116,470, (Attorney Docket No. 1400-1036US) and referenced hereinabove, the UE device can discover applicable network ID code information either in an initial scan procedure (i.e., when the device is not registered on any networks) or in a background scan procedure (i.e. when the device is registered on a network).

Given the diversity of the exemplary network environment 100 described earlier with respect to FIG. 1, it is envisaged that scanning may be effectuated in a frequency band in which at least one of the following technologies is operating: GERAN (without EDGE), GERAN (with EDGE), an IDEN network, a CDMA/CDMA2000/TDMA network, a UMTS network, and so on. Additionally, where WLAN access capability is included, scanning may be effectuated in a frequency band compliant with a WLAN standard selected from: IEEE 802.11b standard, IEEE 802.11a standard, IEEE 802.11g standard, HiperLan standard, HiperLan II standard, Wi-Max standard, OpenAir standard, and Bluetooth standard.

An RSM card 214 is operable to be coupled to the wireless UE/ME device 102, wherein a number of network lists and associated frequency data may be provisioned by network operators, etc. When an RSM is present and the UE device is first turned on, the storage module(s) of the UE device may be updated with any information stored in the RSM. Thus, in one embodiment, the RSM could be programmed with the most current frequency information when it is supplied to a subscriber. The data in the RSM may, for example, add extra frequencies to the default list of frequencies, or raster of frequencies, stored in the device for searching or scanning. Alternatively or additionally, the data in the RSM may modify the frequency data already stored in the device so that those frequencies which are not to be used could be removed, or marked in a way that they are not to be scanned as part of a search strategy. As will be seen below, suitable database structures may be provisioned in the RSM or in the memory of a wireless device for storing applicable frequency data, network list data, among others. Furthermore, additional operator-controlled database structures may be provisioned as well for purposes of managing various forbidden network lists in accordance with the teachings of the present disclosure.

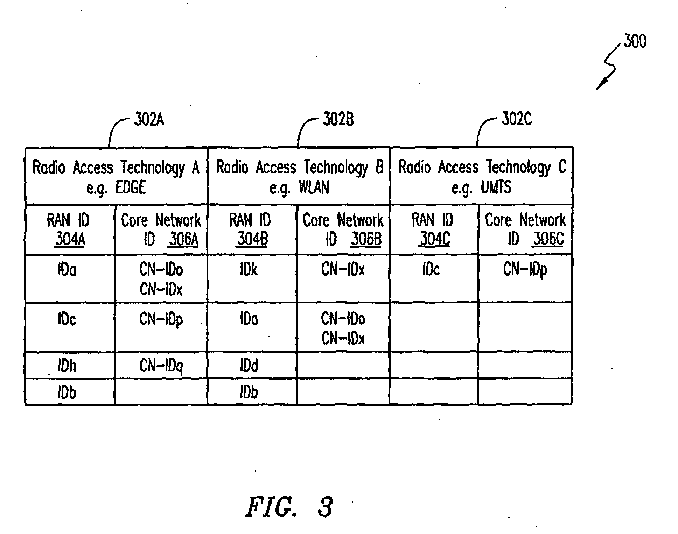

Referring now to FIG. 3, depicted therein is an exemplary database structure that may be provided, either partially or in any combination, as part of an RSM, or stored in memory integrated within a wireless device, or provisioned at a network node (e.g., a home network node or a broker associated therewith) from which network list information may be selectively downloaded to the wireless device for purposes of the present patent disclosure. At the outset, it should be appreciated that the various exemplary database structures set forth in the present patent disclosure may typically be implemented as configurable databases where the entries, elements or other contents can be modified via over-the-air (OTA) methods. For example, a network operator can add, delete, or modify any portion of the relevant network list database(s) as well as selection control database(s). In particular, reference numeral 300 in FIG. 3 refers to an exemplary database structure that may be provided as an operated-based list, a user-based list or an enterprise-based list, or any combination thereof, for facilitating network selection preferences and prohibitions according to one aspect of the present patent disclosure. In one embodiment, the database structure 300 is configured as an operator-defined network list that specifies a plurality of network IDs which should be considered as forbidden networks in one or more radio access technologies, wherein the network IDs are populated by the operator. In another embodiment, the database structure 300 may be configured as one or more user-defined network lists, with one list per user using the wireless UE device, for example, wherein the data entries relate to user-defined forbidden networks. Each such list may be accessed by the users upon identifying themselves to the device, wherein the contents of the list (i.e., network IDs) are populated by the respective users. In yet another embodiment, the database structure 300 may be configured as a list of network IDs that are forbidden by an enterprise owning the wireless devices for the benefit of its employee-users.

Irrespective of the particular configuration, the database structure 300 defines a plurality of radio access technologies, e.g., EDGE technology 302A, WLAN technology 302B, and UMTS technology 302C, wherein a number of RAN IDs are provided for each technology. As illustrated in FIG. 3, column 304A identifies multiple RAN IDs for the EDGE technology, each RAN supporting one or more core networks identified in corresponding column 306A. Likewise, columns 304B/306B and columns 304C/306C are provided for the WLAN and UMTS technologies respectively. As one skilled in the art may appreciate, the various IDs can be Service Set IDs (SSIDs) (for WLAN), SIDs (for IS-95 and IS-136), or [MCC,MNC] combinations (for GSM, where MNC identifies a Mobile Network Code).

Similar to the forbidden or barred network lists set forth above, an analogous database structure may be provided that identifies one or more networks that are preferred. Such a list of preferred networks may be configured as, for example, an operator- preferred RAN list (i.e., specified by an operator), enterprise- preferred RAN list (i.e., specified by an enterprise), operator- preferred CN list (i.e., specified by an operator), and enterprise-preferred CN list (i.e., specified by an enterprise).

Additionally, the provisioning of various preferred and barred/forbidden network lists may be accompanied with appropriate device-based logic or RSM-based logic for specifying the order in which to use them in connection with scanning and network selection. Moreover, each country may have its own regulatory requirements as to which list should take precedence. An enterprise company for instance may forbid access to a public WLAN access point that operates in the vicinity of the company's premises. Further, certain additional logic may be necessary for specifying the scanning behavior as well, since there may be a number of bands on per-technology basis in which the device is capable of scanning. For instance, a list ordering scheme or associated logic may be provided with the device whereby a particular priority order is imposed on the various network lists. If no particular hierarchy/priority is specified, then a default rule may come into play such as, e.g., an operator-defined list has a higher priority than an enterprise-defined list, which in turn has a higher priority than a user-defined list. Additional details regarding list prioritization and scanning behavior may be found in the following commonly owned co-pending U.S. patent applications: (i) "NETWORK SELECTION SCHEME USING A ROAMING BROKER (RB)" filed April 28, 2005; Application No. 11/116,461; and (ii) "SYSTEM AND METHOD FOR PROVIDING NETWORK ADVERTISEMENT INFORMATION VIA A NETWORK ADVERTISEMENT BROKER (NAB)" filed April 28, 2005; Application No. 11/116,470; each of which has been referenced hereinabove.

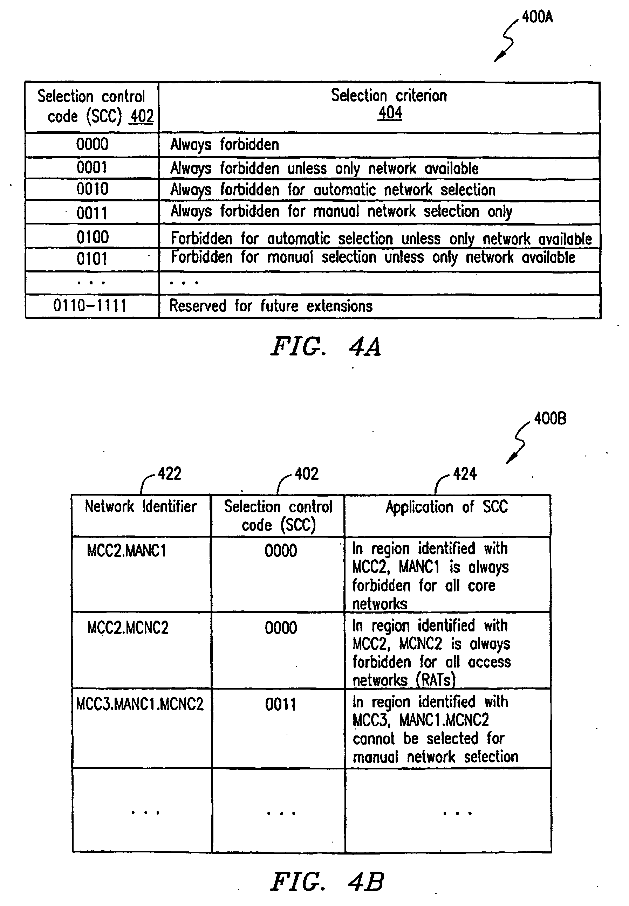

FIGS. 4A and 4B depict exemplary database structures that may be utilized by a wireless device or UE for facilitating management of PLMN list(s) in accordance with the teachings of the present disclosure. As alluded to before, the illustrated database structures may be provisioned, either individually, partially, or in any combination, as part of an RSM or within the memory of a wireless device to which the RSM is operable to be coupled. Preferably, these databases are operable to be written to only once, upon providing the user name and a password associated therewith.

A first database structure 400A is operable to associate a plurality of network selection control codes (SCCs) 402 with a corresponding plurality of network selection criteria 404 related to the management of network lists (e.g. user-defined forbidden network lists, operator-defined forbidden network lists, enterprise-defined forbidden network lists, etc. that have been described hereinabove). As illustrated, SCC 402 may be comprised of a binary code, allowing for a number of selection criteria. For instance, a 4-bit code can support up to 16 selection criteria, although SCCs of variable bit sizes can support any number of selection treatments. By way of example, an SCC of [0000] indicates that all networks that have been associated with the code [0000] should be always forbidden, which cannot be overridden by the user even during manual selection. In another example, an SCC of [0001] indicates that all networks having been associated with the code [0001] should always be forbidden, except when they are the only networks available for selection. Likewise, SCCs of [0010] and [0011] indicate, respectively, that such networks should always be forbidden for automatic selection only or for manual network selection only. Additional treatment options may be configured by the network operator at the time of provisioning to define further modalities of application of a forbidden network list on a wireless device.

A second database structure 400B is preferably populated with a list of networks identified by corresponding network identifiers 422, wherein each network identifier is mapped to or otherwise associated with a corresponding SCC 402. Reference numeral 424 exemplifies how the application of an SCC may modulate a wireless device's network selection process and behavior. Where an exemplary network identifier [MCC2.MANC1] is mapped to the code [0000], the access network identified by [MANC1] is always forbidden for all core networks in a geographic region identified by [MCC2]. In a second example, the network identifier [MCC2.MCNC2] is associated with the code [0000] to indicate that the core network identified by [MCNC2] is always forbidden for all access networks and technologies in the geographic region identified by [MCC2]. Likewise, in a third example, the network identifier [MCC3.MANC1.MCNC2] is associated with the code [0011] to indicate that the particular AN/CN network combination identified by the codes [MANC1] and [MCNC2] cannot be selected for manual network selection in the geographic region identified by [MCC3].

Those skilled in the art should recognize that database structures or logic similar to the databases 400A and 400B described above may be provisioned for other types of network lists as well, e.g., operator-defined preferred network lists, user-defined preferred network lists, and enterprise-defined preferred network lists, etc. Furthermore, appropriate prioritization logic may also be interfaced with the selection control databases 400A and 400B to further modulate the selection behavior. Additionally or alternatively, the selection control databases may be integrated together into a single structure, or may be integrated with other structures such as network lists, either individually, partially, or in any combination, depending on a particular implementation and provisioning.

Preferably, the database structures set forth above may be provisioned and updated only by a network operator (e.g., a home network operator associated with the wireless device). By implementing a "network blacklist" scheme facilitated by the database structures 400A/400B, a number of capabilities may be realized: (i) prevent access to networks on a list by automatic selection; (ii) prevent access to networks on a list by automatic selection except when no other networks are available; (iii) prevent access to networks on a list by automatic and manual selection (i.e., removal of networks on an operator-defined blacklist by manual selection is prevented; and (iv) prevent access to networks on a list by automatic and manual selection except when there are no other networks are available for selection.

FIG. 5 is a flowchart associated with an embodiment of the present patent disclosure wherein a network selection method is disclosed that is modulated by application of a network list associated with a wireless device. Upon scanning by the wireless device in one or more frequency ranges and/or in one or more radio technologies, at least one network may be discovered (block 502), whose identity information is decoded to determine a network identifier associated therewith (block 504). A selection control code associated with the network identifier is then determined (block 506), e.g., by way of querying a suitable data structure such as the database structures described above with reference to FIGS. 4A and 4B. Depending on the selection control code, a particular selection criterion is applied to the discovered network (block 508).

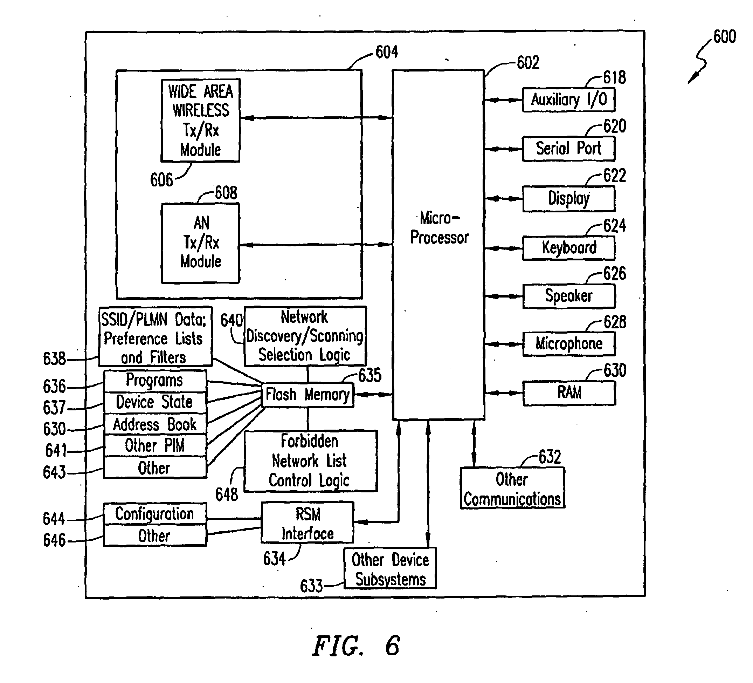

FIG. 6 depicts a block diagram of an embodiment of a wireless device or UE according to the teachings of the present patent disclosure. It will be recognized by those skilled in the art upon reference hereto that although an embodiment of UE 102 may comprise an arrangement similar to one shown in FIG. 6, there can be a number of variations and modifications, in hardware, software or firmware, with respect to the various modules depicted. Accordingly, the arrangement of FIG. 6 should be taken as illustrative rather than limiting with respect to the embodiments of the present patent disclosure. A microprocessor 602 providing for the overall control of UE 600 is operably coupled to a communication subsystem 604 which includes transmitter/receiver (transceiver) functionality for effectuating multi-mode scanning and communications over a plurality of bands. By way of example, a wide area wireless Tx/Rx module 606 and a wireless AN Tx/Rx module 608 are illustrated. Although not particularly shown, each Tx/Rx module may include other associated components such as one or more local oscillator (LO) modules, RF switches, RF bandpass filters, A/D and D/A converters, processing modules such as digital signal processors (DSPs), local memory, etc. As will be apparent to those skilled in the field of communications, the particular design of the communication subsystem 604 may be dependent upon the communications networks with which the UE device is intended to operate. In one embodiment, the communication subsystem 604 is operable with both voice and data communications.

Microprocessor 602 also interfaces with further device subsystems such as auxiliary input/output (I/O) 618, serial port 620, display 622, keyboard 624, speaker 626, microphone 628, random access memory (RAM) 630, a short-range communications subsystem 632, and any other device subsystems generally labeled as reference numeral 633. To control access and manage the device configuration, an RSM (SIM/RUIM/USIM) interface 634 is also provided in communication with the microprocessor 602. In one implementation, RSM interface 634 is operable with an RSM card having a number of key configurations 644 and other information 646 such as identification and subscriber-related data as well as one or more SSID/PLMN lists and database filters described in detail hereinabove.

Operating system software and other control software may be embodied in a persistent storage module (i.e., non-volatile storage) such as Flash memory 635. In one implementation, Flash memory 635 may be segregated into different areas, e.g., storage area for computer programs 636 as well as data storage regions such as device state 637, address book 639, other personal information manager (PIM) data 641, and other data storage areas generally labeled as reference numeral 643. Additionally, appropriate network discovery/selection logic 640 may be provided as part of the persistent storage for executing the various network discovery/scanning and network selection procedures set forth in the preceding sections. Further, another logic module 648 is provided for facilitating forbidden network list control logic, etc. Associated therewith is a storage module 638 for storing the SSID/PLMN lists, selection/scanning filters, capability indicators, et cetera, also described in detail hereinabove.

It is believed that the operation and construction of the embodiments of the present patent application will be apparent from the Detailed Description set forth above. While the exemplary embodiments shown and described may have been characterized as being preferred, it should be readily understood that various changes and modifications could be made therein without departing from the scope the present disclosure as set forth in the following claims.

## Claims

1. A method for managing application of a network list on a wireless device (102), comprising:
providing a first database structure (300) comprising at least one list of forbidden networks identified by corresponding network identifiers, each network identifier comprising a geographic region identifier and at least one of an access network identifier, a core network identifier, and a service network identifier, wherein the at least one list of forbidden networks comprises at least one first network identifier corresponding to a first wide area cellular technology and at least one second network identifier corresponding to a second wide area cellular technology;
**characterized in that** said method further comprises the step of forbidding a user of said wireless device from overriding a forbidden network from the at least one list of forbidden networks even during manual selection.

2. The method of claim 1, wherein the at least one list of forbidden networks comprises at least one of an operator-defined list of forbidden networks and an enterprise-defined list of forbidden networks.

3. The method of claim 1, wherein at least one of the access network identifier is an access network identification code, the core network identifier is a core network identification code, and the service network identifier is a service network identification code.

4. The method of claim 1, wherein the first wide area cellular technology is a code division multiple access network technology and the second wide area cellular technology is a global system for mobile communications network technology.

5. The method of claim 1, wherein the first database structure is stored on a removable storage module (214) operable to be coupled to said wireless device (102).

6. The method of claim 1, wherein at least one of said first database structure and a second database structure (400A, 400B) is stored in a memory module integrated within said wireless device (102).

7. The methods as recited in claims 1-6, wherein the first database structure is operable to be updated only by said home network operator associated with said wireless device (102).

8. A network selection method for use with a wireless device (102), comprising:
determining (504) a network identifier associated with at least one network discovered by said wireless device (102) via scanning (502), wherein said network identifier comprises a geographic region identifier and at least one of an access network identifier, a core network identifier, and a service network identifier; and
determining whether the network identifier is a forbidden network on a list of forbidden networks identified by corresponding network identifiers, wherein the list of forbidden networks comprises at least one first network identifier corresponding to a first wide area cellular technology and at least one second network identifier corresponding to a second wide area cellular technology, **characterized in that** a user of said wireless device is forbidden from overriding a forbidden network, from the list of forbidden networks even during manual selection.

9. The method of claim 8, wherein the list of forbidden networks comprises at least one of an operator-defined list of forbidden networks and an enterprise- defined list of forbidden networks.

10. The method of claim 8, wherein at least one of the access network identifier is an access network identification code, the core network identifier is a core network identification code, and the service network identifier is a service network identification code.

11. The method of claim 8, wherein the first wide area cellular technology is a code division multiple access network technology and the second wide area cellular technology is a global system for mobile communications network technology.

12. The method of claim 8, wherein the list of forbidden networks is stored on a removable storage module (214) operable to be coupled to said wireless device (102).

13. The method of claim 8, wherein at least one of said first database structure and a second database structure (400A, 400B) is stored in a memory module integrated within said wireless device (102).

14. The methods as recited in claims 8-13, wherein the list of forbidden networks is operable to be updated only by said home network operator associated with said wireless device (102).

15. A wireless device (102) configured to perform any combination of the methods set forth in claims 1-14.

## Patentansprüche

1. Verfahren zum Verwalten einer Anwendung einer Netzliste auf einer drahtlosen Vorrichtung (102), mit:
Bereitstellen einer ersten Datenbankstruktur (300) mit mindestens einer Liste an verbotenen Netzen, die durch entsprechende Netzidentifizierer identifiziert sind, wobei jeder Netzidentifizierer einen Geografische-Regions-Identifizierer und mindestens einen aus einem Zugangsnetzidentifizierer, einem Kernnetzidentifizierer und einem Dienstnetzidentifizierer aufweist, wobei die mindestens eine Liste an verbotenen Netzen mindestens einen ersten Netzidentifizierer, der einer ersten Weitraumzelltechnologie entspricht, und mindestens einem zweiten Netzidentifizierer aufweist, der einer zweiten Weitraumzelltechnologie entspricht,
**dadurch gekennzeichnet, dass** das Verfahren ferner den folgenden Schritt aufweist:
Verbieten einem Benutzer der drahtlosen Vorrichtung eines Überschreibens eines verbotenen Netzes aus der mindestens einen Liste an verbotenen Netzen sogar während einer Auswahl von Hand.

2. Verfahren nach Anspruch 1, wobei die mindestens eine Liste an verbotenen Netzen mindestens eine aus einer von einem Betreiber festgelegten Liste an verbotenen Netzen und einer von einem Unternehmen festgelegten Liste an verbotenen Netzen aufweist.

3. Verfahren nach Anspruch 1, wobei der Zugriffsnetzidentifizierer ein Zugriffsnetzidentifiziercode, der Kernnetzidentifizierer ein Kernnetzidentifiziercode und/oder der Dienstnetzidentifizierer ein Dinestnetzidentifiziercode ist.

4. Verfahren nach Anspruch 1, wobei die erste Weitraumzelltechnologie eine Codemultiplexverfahrens-Netztechnologie ist und die zweite Weitraumzelltechnologie eine Netztechnologie eines globalen Systems für mobile Kommunikation (GSM-Netztechnologie) ist.

5. Verfahren nach Anspruch 1, wobei die erste Datenbankstruktur auf einem entfernbaren Speichermodul (214) gespeichert wird, das betriebsbereit ist , mit der drahtlosen Vorrichtung (102) gekoppelt zu werden.

6. Verfahren nach Anspruch 1, wobei mindestens eine aus der ersten Datenbankstruktur und einer zweiten Datenbankstruktur (400A, 400B) in einem Speichermodul gespeichert wird, das in der drahtlosen Vorrichtung (102) integriert ist.

7. Verfahren nach einem der Ansprüche 1 bis 6, wobei die erste Datenbankstruktur betriebsbereit ist, nur vom Heimnetzbetreiber aktualisiert zu werden, der mit der drahtlosen Vorrichtung (102) verknüpft ist.

8. Netzauswahlsverfahren zur Verwendung mit einer drahtlosen Vorrichtung (102), umfassend
Bestimmen (504) eines Netzidentifizierers, der mit mindestens einem Netz verknüpft ist, das von der drahtlosen Vorrichtung (102) über Abtasten (502) entdeckt ist, wobei der Netzidentifizierer einen Geografische-Regions-Identifizierer und mindestens einen aus einem Zugangsnetzidentifizierer, einem Kernnetzidentifizierer und einem Dienstnetzidentifizierer aufweist, und
Bestimmen, ob der Netzidentifizierer ein verbotenes Netz auf einer Liste an verbotenen Netzen ist, die durch entsprechende Netzidentifizierer identifiziert sind, wobei die Liste an verbotenen Netzen mindestens einen ersten Netzidentifizierer, der einer ersten Weitraumzelltechnologie entspricht, und mindestens einem zweiten Netzidentifizierer, der einer zweiten Weitraumzelltechnologie entspricht, aufweist, **dadurch gekennzeichnet, dass** einem Benutzer der drahtlosen Vorrichtung ein Überschreiben eines verbotenen Netzes aus der Liste an verbotenen Netzen sogar während einer Auswahl von Hand verboten wird.

9. Verfahren nach Anspruch 8, wobei die Liste an verbotenen Netzen mindestens eine aus einer von einem Betreiber festgelegten Liste an verbotenen Netzen und einer von einem Unternehmen festgelegten Liste an verbotenen Netzen aufweist.

10. Verfahren nach Anspruch 8, wobei der Zugriffsnetzidentifizierer ein Zugriffsnetzidentifiziercode, der Kernnetzidentifizierer ein Kernnetzidentifiziercode und/oder der Dienstnetzidentifizierer ein Dienstnetzidentifiziercode ist.

11. Verfahren nach Anspruch 8, wobei die erste Weitraumzelltechnologie eine Codemultiplexverfahrens-Netztechnologie ist und die zweite Weitraumzelltechnologie eine Netztechnologie eines globalen Systems für mobile Kommunikation ist.

12. Verfahren nach Anspruch 8, wobei die Liste an verbotenen Netzen auf einem entfernbaren Speichermodul (214) gespeichert ist, das betriebsbereit ist, mit der drahtlosen Vorrichtung (102) gekoppelt zu werden.

13. Verfahren nach Anspruch 8, wobei mindestens eine aus der ersten Datenbankstruktur und einer zweiten Datenbankstruktur (400A, 400B) in einem Speichermodul gespeichert wird, das in der drahtlosen Vorrichtung (102) integriert ist.

14. Verfahren nach einem der Ansprüche 8 bis 13, wobei die Liste an verbotenen Netzen betriebsbereit ist, nur vom Heimnetzbetreiber aktualisiert zu werden, der mit der drahtlosen Vorrichtung (102) verknüpft ist.

15. Drahtlose Vorrichtung (102), die dazu konfiguriert ist, eine beliebige Kombination der Verfahren nach den Ansprüchen 1 bis 14 durchzuführen.

## Revendications

1. Procédé pour gérer l'application d'une liste de réseaux dans un dispositif (102) sans fil, comprenant le fait :
de fournir une première structure (300) de base de données comprenant au moins une liste de réseaux interdits identifiés par des identifiants de réseaux correspondants, chaque identifiant de réseau comprenant un identifiant de région géographique et au moins l'un d'un identifiant de réseau d'accès, d'un identifiant de réseau central et d'un identifiant de réseau de service, dans lequel l'au moins une liste de réseaux interdits comprend au moins un premier identifiant de réseau correspondant à une première technologie de réseau cellulaire étendu et au moins un deuxième identifiant de réseau correspondant à une deuxième technologie de réseau cellulaire étendu ; **caractérisé en ce que** ledit procédé comprend en outre l'étape qui consiste à
interdire à un utilisateur dudit dispositif sans fil de sélectionner un réseau interdit de l'au moins une liste de réseaux interdits même lors d'une sélection manuelle.

2. Procédé de la revendication 1, dans lequel l'au moins une liste de réseaux interdits comprend au moins l'une d'une liste de réseaux interdits définie par un opérateur et d'une liste de réseaux interdits définie par une entreprise.

3. Procédé de la revendication 1, dans lequel au moins l'un de l'identifiant de réseau d'accès est un code d'identification de réseau d'accès, de l'identifiant de réseau central est un code d'identification de réseau central, et de l'identifiant de réseau de service est un code d'identification de réseau de service.

4. Procédé de la revendication 1, dans lequel la première technologie de réseau cellulaire étendu est une technologie de réseau d'accès multiple par répartition en code et la deuxième technologie de réseau cellulaire étendu est une technologie de réseau du système mondial de communications avec les mobiles.

5. Procédé de la revendication 1, dans lequel la première structure de base de données est stockée sur un module de stockage (214) amovible pouvant fonctionner pour être couplé audit dispositif sans fil (102).

6. Procédé de la revendication 1, dans lequel au moins l'une de ladite première structure de base de données et d'une deuxième structure (400A, 400B) de base de données est stockée dans un module de mémoire intégré dans ledit dispositif sans fil (102).

7. Procédés selon les revendications 1-6, dans lesquels la première structure de base de données peut fonctionner pour n'être actualisée que par ledit opérateur de réseau domestique associé audit dispositif sans fil (102).

8. Procédé de sélection de réseau à utiliser avec un dispositif sans fil (102), comprenant le fait :
de déterminer (504) un identifiant de réseau associé à au moins un réseau découvert par ledit dispositif sans fil (102) par balayage (502), dans lequel ledit identifiant de réseau comprend un identifiant de région géographique et au moins l'un d'un identifiant de réseau d'accès, d'un identifiant de réseau central et d'un identifiant de réseau de service ; et
de déterminer si l'identifiant de réseau est un réseau interdit sur une liste de réseaux interdits identifiés par des identifiants de réseaux correspondants, dans lequel la liste des réseaux interdits comprend au moins un premier identifiant de réseau correspondant à une première technologie de réseau cellulaire étendu et au moins un deuxième identifiant de réseau correspondant à une deuxième technologie de réseau cellulaire étendu, **caractérisé en ce qu'**on interdit à un utilisateur dudit dispositif sans fil de sélectionner un réseau interdit de la liste de réseaux interdits même lors d'une sélection manuelle.

9. Procédé de la revendication 8, dans lequel la liste de réseaux interdits comprend au moins l'une d'une liste de réseaux interdits définie par un opérateur et d'une liste de réseaux interdits définie par une entreprise.

10. Procédé de la revendication 8, dans lequel au moins l'un de l'identifiant de réseau d'accès est un code d'identification de réseau d'accès, de l'identifiant de réseau central est un code d'identification de réseau central et de l'identifiant de réseau de service est un code d'identification de réseau de service.

11. Procédé de la revendication 8, dans lequel la première technologie de réseau cellulaire étendu est une technologie de réseau d'accès multiple par répartition en code et la deuxième technologie de réseau cellulaire étendu est une technologie de réseau du système mondial de communications avec les mobiles.

12. Procédé de la revendication 8, dans lequel la liste de réseaux interdits est stockée sur un module de stockage (214) amovible pouvant fonctionner pour être couplé audit dispositif sans fil (102).

13. Procédé de la revendication 8, dans lequel au moins l'une de ladite première structure de base de données et d'une deuxième structure (400A, 400B) de base de données est stockée dans un module de mémoire intégré dans ledit dispositif sans fil (102).

14. Procédés selon les revendications 8-13, dans lesquels la liste de réseaux interdits peut fonctionner pour n'être actualisée que par ledit opérateur de réseau domestique associé audit dispositif sans fil (102).

15. Dispositif sans fil (102) configuré pour mettre en oeuvre n'importe quelle combinaison des procédés des revendications 1-14.
